## Europäisches Patentamt
## European Patent Office
## Office européen des brevets

(19)

(11) Veröffentlichungsnummer: **0 233 535**
**B1**

(12)
# EUROPÄISCHE PATENTSCHRIFT

(45) Veröffentlichungstag der Patentschrift: **23.01.91**

(21) Anmeldenummer: **87101422.1**

(22) Anmeldetag: **03.02.87**

(60) Teilanmeldung 90106580.5 eingereicht am 03/02/87.

(51) Int. Cl.⁵: **A 47 J 39/00,** A 47 J 27/16, F 24 C 15/32

(54) **Gerät zum Garen von Nahrungsmitteln und Verfahren zum Betrieb des Gerätes.**

(30) Priorität: **19.02.86 DE 8604451 u**

(43) Veröffentlichungstag der Anmeldung:
**26.08.87 Patentblatt 87/35**

(45) Bekanntmachung des Hinweises auf die Patenterteilung:
**23.01.91 Patentblatt 91/04**

(84) Benannte Vertragsstaaten:
**CH DE FR IT LI**

(56) Entgegenhaltungen:
**CH-A- 522 389**
**DE-A-1 906 711**
**DE-A-2 214 788**
**DE-A-2 607 193**
**DE-A-2 747 097**
**DE-A-2 842 771**
**DE-B-2 605 816**
**FR-A-2 219 389**
**FR-A-2 351 360**
**FR-A-2 507 440**
**US-A-3 744 474**
**US-A-4 058 635**

(73) Patentinhaber: **Eloma GmbH Bedarfsartikel zur Gemeinschaftsverpflegung Rudolf-Diesel-Strasse 15 D-8031 Gernlinden (DE)**

(72) Erfinder: **Spann, Gustav Heinrich-Feller-Strasse 80 D-8089 Emmering (DE)**

(74) Vertreter: **Bohnenberger, Johannes, Dr. et al Meissner, Bolte & Partner Widenmayerstrasse 48 Postfach 86 06 24 D-8000 München 86 (DE)**

Courier Press, Leamington Spa, England.

**Beschreibung**

Die Erfindung betrifft ein Gerät zum Garen von Nahrungsmitteln nach dem Oberbegriff des Patentanspruches 1 sowie ein Verfahren zum Betrieb eines solchen Gerätes.

Aus der US—A—4 058 635 ist ein derartiges Gerät bekannt, wobei das zu verdampfende Wasser über Sprühdüsen zerstäubt wird, die kurz vor der Ansaugöffnung des Gebläses angeordnet sind. Um bei einem solchen Gerät eine konstante, gleichmäßige Verdampfung zu erreichen, muß das Wasser mit relativ hohem Druck eingespritzt werden. Dies bedeutet, daß immer eine gewisse Mindest-Wassermenge zugeführt werden muß. Sobald weniger Wasser zugeführt wird, nicht die Zerstäubung durch die Düsen nicht mehr aus, das Wasser tropft unzerstäubt zu Boden.

Aus der DE—A—26 05 816 ist ein Gergerät bekannt, bei welchem eine erwärmbare Platte mit mehreren Öffnungen vorgesehen ist, durch die Wasser gesprüht wird. Bei Kontakt mit der Platte verdampft das Wasser. Bei dieser Anordnung kann es relativ leicht geschehen, daß die Öffnungen in der beheizbaren Platte durch Feststoffteilchen oder Verunreinigungen verstopft werden, wodurch die Dampferzeugung behindert wird.

Weiterhin sind sogenannte Heißumluft-Dämpfer bekannt, die ähnlich dem eingangs ganannten Gerät ein Gebläserad zur Erzeugung einer Luft-Umwälzung im Garraum aufweisen. Bei diesen bekannten Geräten wird Dampf in einem Druckkessel erzeugt und über steuerbare Ventile in den Garraum eingeleitet. Diese Dampfbereitungseinrichtung macht das Gerät relativ aufwendig.

Der Erfindung liegt die Aufgabe zugrunde, ein Gerät zum Garen von Nahrungsmitteln in der eingangs genannten Art dahingehend weiterzubilden, daß mit einfachen Mitteln eine variable und dennoch gleichmäßoge Dampferzeugung ermöglicht wird.

Diese Aufgabe wird durch die Merkmale des Patentanspruches 1 gelöst.

Dadurch, daß das Wasser direkt von oben auf die Nabe des Gabläserades drucklos, also ohne Düse geführt wird, erübrigen sich die bisher notwendigen Düsen. Der Wasserbruck kann sehr niedrig sein. Weiterhin wird einer Verstopfung vorgebeugt, die bei Verwendung von Düsen und Zufuhr von stark kalkhaltigem Wasser oftmals festgestellt werden muß.

Im Dämpf-Betrieb ist es von Vorteil, wenn die Luftförderleistung des Gebläses (gegenüber einem Betrieb als Heißumluft-Ofen) reduziert wird. Dadurch kann man erreichen, daß keine übergroßen Mengen von Wasser in den Garraum getrieben werden, wobei die Dampferzeugungswirkung dennoch gleich bleibt. Dies ist besonders dann sehr einfach zu erreichen, wenn man den Elektromotor, der das Gebläserad treibt, beim Dämpfen in seiner Drehrichtung umkehrt. Dann bleibt die Drehzahl des Gabläserades und somit die Zerstäubungswirkung zwar konstant, die Luftförderleistung sinkt aber ganz erheblich ab.

Vorzugsweise führt man während des Dämpfbetriebes ständig Wasser zu (und überschüssiges Wasser über eine Abflußleitung im Boden des Gerraumes ab) und hält die Temperatur im Garraum mittels einer thermostatischen Regelung konstant. Im Gegensatz zum intermittierenden Erzeugen von Dampf wird dadurch eine höhere Gleichmäßigkeit der Luftfeuchte (des Dampfmilieus) erreicht und gleichzeitig der Regelungsaufwand wesentlich vermindert.

Ein ganz wesentlicher Vorteil der vorliegenden Erfindung liegt auch darin, daß man auch bei Temperaturen unter 100°C problemlos dämpfen kann. Durch dieses Nieder-Temperatur-Dämpfen kann auch sehr kritisches Gargut (z.B. Fisch) problemlos gegart werden.

Weitere erfindungswesentliche Details ergeben sich aus den abhängigen Ansprüchen 2 bis 7. Nachfolgend ist die Erfindung anhand von Ausführungs -beispielen näher beschrieben. Hierbei zeigen:

Fig. 1 eine Ausführungsform der Erfindung in schematischer Vorderansicht;

Fig. 2 die Anordnung nach Fig. 1 in Draufsicht;

Fig. 3 ein Blockschaltbild zur Erläuterung des Betriebes einer Vorrichtung nach den Fig. 1 oder 2; und

Fig. 4 ein Zeitdiagramm zur Erläuterung des Betriebes der Vorrichtung nach Fig. 3.

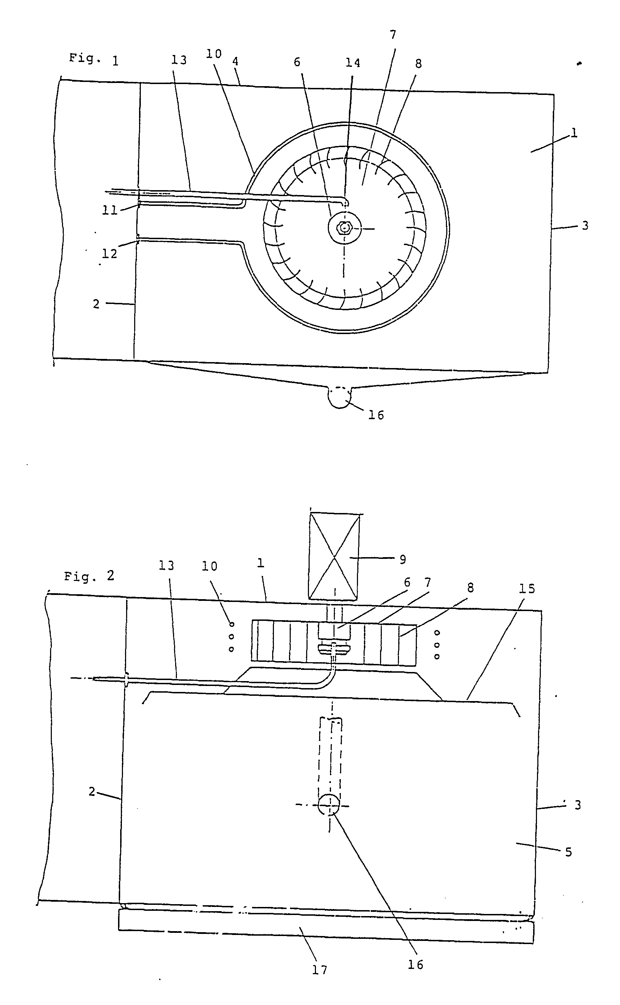

Das Gargerät besteht aus einem geschlossenen Raum mit einer Rückwand 1, mit Seitenwänden 2 und 3, einer Decke 4, einem Boden 5 und einer Tür 17 an der Vorderseite (siehe Fig. 1 bis 4). An der Rückwand 4 ist ein Schaufelrad gelagert, das eine Nabe 6, eine Scheibe 7 und am Umfang Schaufeln 8 aufweist. Zum Antrieb des Schaufelrades ist ein Elektromotor 9 vorgesehen, der außerhalb des Gehäuses angeordnet ist. Das Schaufelrad ist von einer Heizschlange 10 umgeben, deren Anschlüsse 11 und 12 dicht durch eine Seitenwand 2 geführt sind. Durch die Seitenwand 2 läuft auch ein Wasserzuführungsleitung 13, die—wie weiter unten näher erläutert—über ein Magnetventil mit einer Wasserzuführung in Verbindung steht.

Das Schaufelrad mit der Heizschlange 10 und der Wasserzuführungsleitung 13 ist gegenüber dem eigentlichen Garraum, in den die Speisen einbringbar sind, über eine abnehmbare Abdeckung 15 getrennt. Die Abdeckung 15 ist so ausgebildet, daß eine Luft- (und Dampf-) Zirkulation durch das Gebläserad aufrecht erhalten werden kann.

Der Boden 5 des Gerätes ist nach unten leicht gewölbt und weist an seinem tiefsten Punkt einen Ablauf 16 auf.

Wie aus den Fig. 1 und 2 hervorgeht, endet die Wasserzuführungsleitung 13 ohne Düse über der Nable 6 derart, daß ausströmendes Wasser anabhängig von Ausström-Druck auf die Nabe 6 auftrifft. Überraschenderweise hat es sich gezeigt, daß selbst langsam ausströmendes Wasser durch die drehende Nabe 6 verteilt und nachfolgend durch die Schaufeln 8 weiter zerstäubt wird, ohne daß eine Druck-Zerstäubung notwendig wäre.

Durch die Anordnung der elektrischen Heizelemente 10 als Wendel rings um das Gabläserad wird ein besonders günstiger Wärmeübergang erzielt.

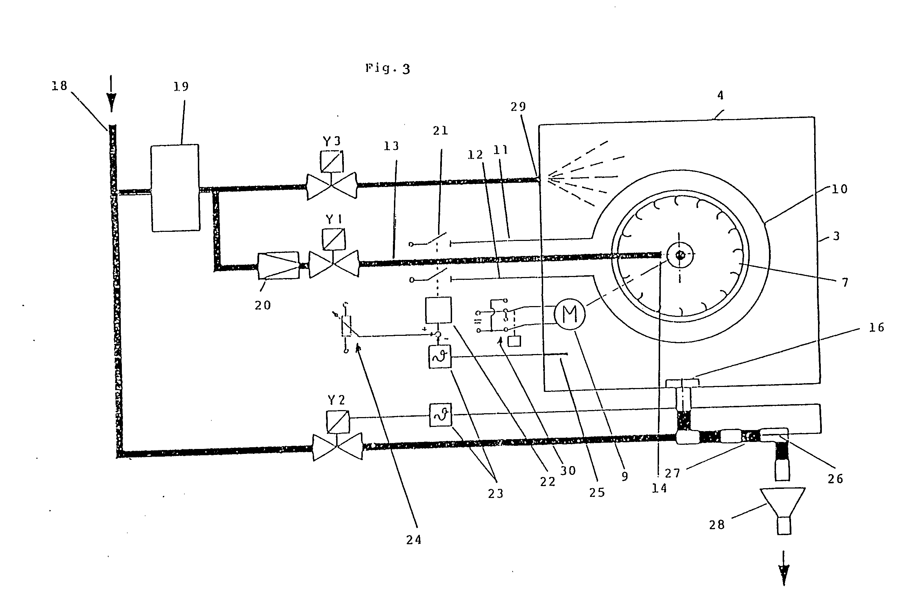

In Fig. 3 ist die Gesamtanordnung als Blockschaltbild gezeigt. Aus dieser Abbildung geht hervor, daß vor der Austrittsöffnung 14 in der Wasserzuführungsleitung 13 ein Magnetventil Y1 angeordnet ist, dem ein Druckminderer 20 vorgeschaltet ist. Bei der in den Fig. 1 und 2 gezeigten Ausführungsform ist dieser Druckminderer auf einen Druck von ca. 1 bar eingestellt. Der Druckminderer 20 steht eingangsseitig mit dem Auslaß eines Wasserenthärters 19 in Verbindung, der eingangsseitig mit einem Wasseranschluß 18 verbunden ist.

Neben der Wasserzuführung über die Austrittsöffnung 14 ist eine Beschwadungsdüse 29 vorgesehen, über die bei Öffnen eines Magnetventiles Y3, das in einer Leitung zwischen Beschwadungsdüse 29 und Enthärter 19 angeordnet ist, Wasser in den Garraum (im Betrieb als Heißumluft-Ofen) eingesprüht werden kann.

Der Elektromotor 9 ist bei der in Fig. 3 gezeigten Ausführung als Gleichstrommotor ausgeführt und steht über einen Umpolschalter 30 mit einer Gleichstromquelle in Verbindung. Selbstverständlich ist es auch möglich, andere umsteuerbare Elektromotoren mit entsprechenden Umsteuermitteln anstelle des Gleichstrommotores vorzusehen. Bei einer entsprechenden Ausbildung der Schaufeln 8 des Gebläserades ist es möglich, je nach Drehrichtung des Elektromotores 9 eine höhere oder niedriger Luftförderleitsung zu erzielen, wobei die Derhzahl des Gebläserades gleich bleibt. wenn man somit den Elektromotor 9 in einer Drehrichtung betreibt, die im Hinblick auf die Konstruktion der Schaufeln 8 an sich "falsch" ist, so erzielt man eine gute Zerstäubungswirkung und stellt dennoch sicher, daß nicht zuviel Wasser durch den ansonsten starken Luftstrom in den Garraum getrieben wird.

Die Heizelemente 10 sind über einen steuerbaren Schalter 21 (Relais) an das elektrische Stromnetz (nicht gezeigt) angeschlossen. Der steuerbare Schalter 21 wird vom Ausgang eines (Zweipunkt-) Reglers 22 gesteuert, an dessen Eingang ein Vergleich zwischen einem Soll-Wert und einem Ist-Wert durchgeführt wird. Der Soll-Wert ist über einen Sollwertsteller 24 einstellbar, während der Ist-Wert über einen Temperaturfühler 25 im Garraum mit nechgeschaltetem Maßwandler 23 stammt. Je nach Einstellung des Sollwertstellers 24 wird somit die Temperatur im Garraum im wesentlichen konstant gehalten.

Der am Boden 5 des Garraumes angebrachte Ablauf 16 mündet in einen Ablauftrichter 28, so daß überschüssiges Wasser aus dem Garraum abgeführt werden kann. Nachdem aber beim Einsprühen und Verdampfen von Wasser ein Überdruck im Garraum entsteht und somit auch Dampf aus dem Garraum abgeführt werden muß, ist dem Ablauf 16 ein Kondensator 27 nachgeschaltet, der über direktes Einführen von (kaltem) Frischwasser den Dampf kondensiert. Zur Steuerung der Frischwasserzuführung ist ein Magnetventil Y2 vorgesehen, das über einen Temperaturfühler 26 am Ende des Kondensators 27 mit nachgeschaltetem Meßwandler 23 angesteuert wird. Übersteigt die Temperatur am Ende des Kondensators 27 einen fest eingestellten Sollwert, so wird das Ventil Y2 geöffnet und Frischwasser aus dem Wasseranschluß 18 dem Kondensator 27 zugeführt und zusammen mit dem kondensierten Dampf in den Ablauftrichter 28 entlassen.

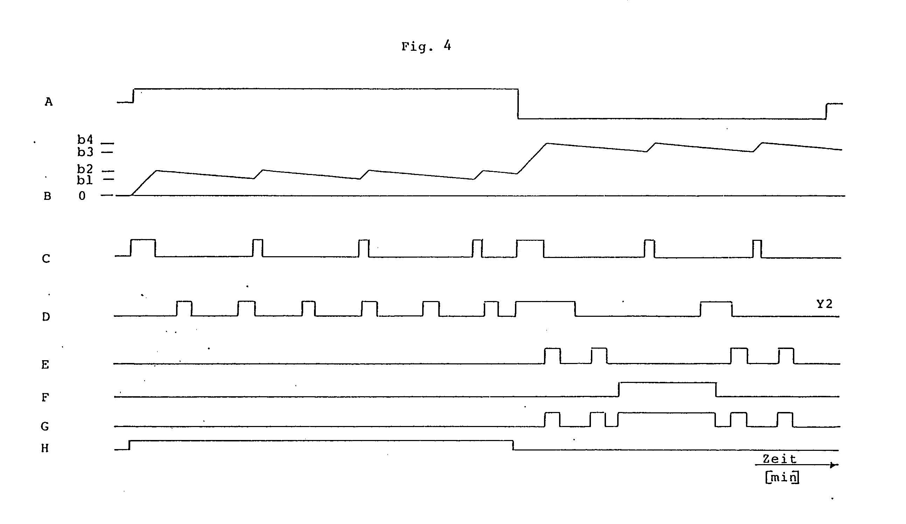

Im folgenden wird der Betrieb des Gerätes anhand von Fig. 4 näher erläutert, wobei das Gerät zunächst als Dämpfer und dann als reiner Heißumluft-Ofen arbeitet.

Fig. 4A zeigt die Drehzahl und Drehrichtung des Elektromotors 9; Fig. 4B den Temperaturverlauf im Inneren des Garraumes; Fig. 4C den Schaltzustand des Schalters 21 (oben=an; unten=aus); Fig. 4D den Schaltzustand des Ventiles Y2; Fig. 4E den Schaltzustand einer Beschwadungsautomatik (oben=an); Fig. 4F den Schaltzustand einer Handbetätigungstaste (oben=an); Fig. 4G den Schaltzustand des Ventiles Y3 (oben=an) und Fig. 4H den Schaltzustand des Ventiles Y1 (oben=an).

Das in Fig. 4 gezeigte "Programm" erläutert den Betrieb des erfindungsgemäßen Gerätes zuerst als Dämpfer und dann als Heißumluft-Ofen. Während der ersten Phase läuft der Motor 9 in einer Richtung, die einem geringen Luftförderstrom entspricht. Die Verzögerungzeit am Beginn des Programmes stellt sicher, daß das Gerät erst dann zu laufen beginnt, wenn die Tür sicher nicht mehr geöffnet wird (Verzögerungzeit=15 sec.).

Sobald das Schaufelrad zu drehen beginnt, setzt die Heizung ein und heizt den Innenraum des Gerätes bis zur Temperatur t2 auf. Bei Erreichen der Temperatur T2 schaltet der Regler 22 den Schalter 21 aus, worauf sich der Innenraum des Gerätes sich langsam wieder abkühlt und zwar bis zur Temperatur t1. Bei Erreichen der Temperatur t1 beginnt ein erneuter Heizvorgant. Wenn nach der Dämpfphase, die bei 100°C auch darunter stattfindenn kann, die Heißluft-Phase beginnt, so wird die Temperatur im Innenraum des Gerätes bis auf den Temperaturwert t4 angehoben und kann danach wieder zum Temperaturwert t3 absinken, um danach wieder angehoben zu werden usw.

Während des Dämpfens wird immer wieder das Ventil Y2 geöffnet, um im Kondensator 27 aus dem Geräteinnenraum ausströmenden Dampf zu kondensieren. Wenn nach dem Übergang von der Dampf- zur Heißluftphase das im Innenraum des Gerätes befindliche Rest-Wasser verdampft und durch die Öffnung 16 im Boden des Gerätes austritt, so wird über eine längere Zeit hinweg das Ventil Y2 geöffnet, da die Temperatur am Temperaturfühler 26 über langere Zeit hinweg einen höheren Wert erreicht.

Beim Gerät ist eine Zeit-Automatik vorgesehen, die ein intermittierendes Einsprühen von Wasser über die Beschwadungsdüse 29 während der Heißluftphase ermöglicht. Der Schaltzustand dieser Automatik ist in Fig. 4E gezeigt. Darüber hinaus kann bei Bedarf auch ein von Hand ausgelöstes Signal gegeben werden (Fig. 6F), um eine größere Wassermenge einzuspritzen. Währens dieser Zeit ist die Automatik (Fig. 4E) stillgelegt. Das Ventil Y3 reagiert auf beide Signale (Oder-Funktion), wie dies in Fig. 4G gezeigt ist.

Während des gesamten Dämpfvorganges ist das Ventil Y1 geöffnet, wie dies in Fig. 4H gezeigte ist. Hinsichtlich dieser Betriebsweise unterscheidet sich das erfindungsgemäße Gerät ganz wesentlich von Geräten mit einem Dampferzeuger, da derartige Dampferzeuger intermittierend (gepulst) Dampf einblasen, was einen wesentlich höheren Steueraufwand und auch Verschleiß mit sich bringt. Darüber hinaus wird beim erfindungsgemäßen eine ganz einfache Temperaturregelung vorgenommen, wobei durch den ständigen Wasserzufluß ein konstantes Dampfmilieu erzeugbar ist. Überschüssiges Wasser, das also nicht an den Heizelementen 10 oder an den Aufgeheizten Innenwänden des Gerätes verdampft, fließt ganz einfach durch den Ablauf 16 ab. Auf diese Weise wird mit einfaschsten Mitteln ein besonders gleichmäßiger Betrieb des Dämpfers gewährleistet.

**Patentansprüche**

1. Gerät zum Garen von Nahrungsmitteln mit einem geschlossenen Garraum mit mindestens einer Wasserzuführungsleitung (13) mit mindestens einer Austrittsöffnung (14), mit elektrischen Heizelementen (10) und mit einer elektrischen Steuerschaltung, wobei die Austrittsöffnung (14) der Wasserzuführungsleitung (13) im Bereich eines Lufteinlasses eines Gebläse-Schaufelrades (6—8) angeordnet ist, dadurch gekennzeichnet, daß die Austrittsöffnung (14) der Wasserzuführung (13) derart radial auf -Schaufelrades (6—8) die Nabe (6) des Gebläse (6—8) gerichtet und über dieser angebracht ist, daß ausströmendes Wasser von oben auf die Nabe (6) im wesentlichen frei fließen oder tropfen kann.

2. Gerät nach Anspruch 1, dadurch gekennzeichnet, daß die Heizelemente rings um das Schaufelrad (6—8) angeordnet sind.

3. Gerät nach einem der vorhergehenden Ansprüche, dadurch gekennzeichnet, daß Mittel (30) vorgesehen sind, um die Luftförderleistung des Gebläse-Schaufelrades (6—8) zu reduzieren.

4. Gerät nach Anspruch 3, dadurch gekennzeichnet, daß die Mittel (30) zur Reduzierung der Luftförderleistung derart ausgebildet sind, daß die Drehzahl des Gebläse-Schaufelrades auch bei reduzierter Luftförderleistung im wesentlichen nicht vermindert wird.

5. Gerät nach einem der Ansprüche 3 oder 4, dadurch gekennzeichnet, daß die Mittel (30) zur Reduzierung der Luftförderleistung als Umsteuerschalter (30) ausgebildet sind, der die Drehrichtung eines, das Gebläse-Schaufelrad antreibenden Elektromotors (9) umkehrt.

6. Gerät nach einem der Ansprüche 3 bis 5, dadurch gekennzeichnet, daß die Steuerschaltung derart ausgebildet ist, daß dann, wenn ein steuerbares Ventil (Y1) in der Wasserzuführungsleitung (13) mit einem vorgeschalteten Druckminderer (20) geöffnet ist, die luftförderleistung über die Mittel (30) reduziert ist.

7. Verfahren zum Betrieb eines Gerätes zum Garen von Nahrungsmitteln nach einem der vorhergehenden Ansprüche, dadurch gekennzeichnet, daß man während des Garens durch Wasserdampf ständig Wasser zuführt und zerstäubt und dabei die Luftförderleistung des Gebläse-Schaufelrades vermindert und die Temperatur im Garraum konstant hält.

**Revendications**

1. Appareil pour cuire des aliments, muni d'une chambre de cuisson fermée avec au moins une canalisation d'amenée d'eau (13) avec au moins un orifice de sortie (14) d'éléments de chauffage électriques (10) et d'un commutateur de commande électrique, dans lequel l'orifice de sortie (14) de la canalisation d'amenée d'eau (13), est disposé dans la zone d'une entrée d'air d'une roue de ventilateur à aubes (6—8), caractérisé en ce que l'orifice de sortie (14) de la canalisation d'amenée d'eau (13) est dirigé radialement vers le moyeu (6) de la roue à aubes (6—8) du ventilateur (6—8) et est fixée sur ce moyeu, de sortie que de l'eau s'échappant au dessus du moyeu (6) peut pour l'essentiel couler ou goutter librement.

2. Appareil selon la revendication 1, caractérisé en ce que les éléments de chauffage sont disposés autour de la roue à aubes (6—8).

3. Appareil selon l'une des revendications précédentes, caractérisé en ce que sont prévus des moyens (30) pour réduire le débit d'air du ventilateur à roue à aubes (6—8).

4. Appareil selon la revendication 3, caractérisé en ce que les moyens (30) pour réduire le débit d'air sont agencés de sorte que le nombre de tours de la roue à aubes du ventilateur ne soit pas également diminué pour l'essentiel par la réduction du débit d'air.

5. Appareil selon l'une des revendications 3 ou 4, caractérisé en ce que les moyens (30) pour réduire le débit d'air sont agencés en tant que commutateur inverseur, qui inverse le sens de rotation d'un moteur électrique actionnant la roue à aubes du ventilateur.

6. Appareil selon l'une des revendications 3 à 5, caractérisé en ce que le commutateur de commande est agencé de sorte que, lorsque une vanne commandable (41) est ouverte dans la canalisation d'amenée d'eau (13) avec un détendeur inséré (20), le débit d'air est ensuite réduit par les moyens (30).

7. Procédé pour la mise en oeuvre d'un appareil de cuisson d'aliments selon l'une des revendications précédentes, caractérisé en ce que, pendant la cuisson, par de la vapeur d'eau, on amène et on pulvérise en permanence de l'eau, et, aussi, on diminue le débit d'air de la roue à aubes du ventilateur et on maintient constante la température dans la chambre de cuisson.

**Claims**

1. An apparatus for cooking food, comprising a closed cooking chamber which is provided with at least one water supply conduit (13) including an outlet (14), with electric heating elements (10) and with an electric control circuit, said outlet (14) of said water supply conduit (13) being disposed in the vicinity of an air inlet of a fan blade wheel (6—8), characterized in that said outlet (14) of said water supply conduit (13) is directed radially towards the hub (6) of said fan blade wheel (6—8) and disposed thereabove so as to permit outflowing water to flow or drip substantially freely from above onto said hub (6).

2. An apparatus as claimed in claim 1, characterized in that said heating elements are disposed around said blade wheel (6—8).

3. An apparatus as claimed in any one of the preceding claims, characterized in that means (30) are provided for reducing the air discharge rate of said fan blade (6—8).

4. An apparatus as claimed in claim 3, characterized in that said means (30) for reducing the air discharge rate is designed so that the rotational speed of said fan blade wheel is substantially not reduced even at a reduced air discharge rate.

5. An apparatus as claimed in claim 3 or claim 4, characterized in that said means (30) for reducing the air discharge rate is in the form of a reversing switch (30) for reversing the direction of rotation of an electric motor (9) driving said fan blade wheel.

6. An apparatus as claimed in any one of claims 3 to 5, characterized in that said control circuit is designed so that the air discharge rate is reduced through said means (30) when a controllable valve (Y1) disposed in said water supply conduit (13) and having a pressure reducing element (20) upstream thereof is open.

7. A method of operating an apparatus for cooking food as claimed in any one of the preceding claims, characterized in that water is continuously supplied and atomized during cooking by steam while the air discharge rate of said fan blade wheel is reduced and the temperature in said cooking chamber is maintained constant.

Fig. 1

Fig. 2

1

Fig. 3

2

Fig. 4